**Europäisches Patentamt**

**European Patent Office**

**Office européen des brevets**

(19)

(11) Veröffentlichungsnummer: **0 211 011**
**B1**

(12) # EUROPÄISCHE PATENTSCHRIFT

(45) Veröffentlichungstag der Patentschrift:
**31.05.89**

(51) Int. Cl.⁴: **H 02 P 5/418**

(21) Anmeldenummer: **86900666.8**

(22) Anmeldetag: **21.12.85**

(86) Internationale Anmeldenummer:
**PCT/EP 85/00737**

(87) Internationale Veröffentlichungsnummer:
**WO 86/04468 (31.07.86 Gazette 86/17)**

(54) SCHALTUNGSANORDNUNG ZUR DREHZAHLREGELUNG EINES REIHENSCHLUSSMOTORS.

(30) Priorität: **19.01.85 DE 3501727**

(43) Veröffentlichungstag der Anmeldung:
**25.02.87 Patentblatt 87/9**

(45) Bekanntmachung des Hinweises auf die Patenterteilung:
**31.05.89 Patentblatt 89/22**

(84) Benannte Vertragsstaaten:
**CH FR GB IT LI**

(56) Entgegenhaltungen:
**DE-A-2 041 148**
**DE-A-3 022 434**

(73) Patentinhaber: **TELEFUNKEN electronic GmbH,
Theresienstrasse 2, D-7100 Heilbronn (DE)**

(72) Erfinder: **ZEITVOGEL, Heinrich, Kraiberg 46, D-8074
Gaimersheim (DE)**

(74) Vertreter: **Maute, Hans- Jürgen, Dipl.- Ing.,
TELEFUNKEN electronic GmbH Theresienstrasse
2, D-7100 Heilbronn (DE)**

LIBER, STOCKHOLM 1989

## Beschreibung

Die Erfindung betrifft eine Schaltungsanordnung gemäß dem Oberbegriff des Anspruchs 1.

Bei einer bekannten Schaltungsanordnung dieser Art (DE-OS-2 906 388) ist zwischen zwei Feldwicklungshälften die Serienschaltung der Ankerwicklung des elektrischen Motors und eines steuerbaren Gleichrichters geschaltet. Parallel zu dieser Serienschaltung liegt ein Potentiometer, dessen Abgriff auf den invertierenden Eingang eines als integrierender Verstärker ausgebildeten Operationsverstärkers geführt ist. Der nicht invertierende Eingang des Operationsverstärkers liegt an dem Anschluß des Potentiometers, der unmittelbar an eine Elektrode des steuerbaren Gleichrichters angeschaltet ist. Parallel zu dem von diesem Bezugspotentialpunkt ausgehenden Feldwicklungsteil ist die Serienschaltung aus einem Kondensator und einem ohmschen Widerstand geschaltet, wobei der Kondensator an den Bezugspotentialpunkt angeschlossen ist. Vom Verbindungspunkt des Kondensators und des Widerstandes führt eine Leitung zum invertierenden Eingang des Operationsverstärkers. Damit wird ein dem Motorstrom proportionales Signal erzeugt, welches dem am Potentiometer abgegriffenen Signal entgegengeschaltet ist. Der Ausgang des Operationsverstärkers steuert eine Phasenanschnittsteuerung, die ihrerseits die Steuerelektrode des steuerbaren Gleichrichters beaufschlagt. Von Nachteil ist bei dieser Schaltungsanordnung, daß über das Potentiometer, das zur Drehzahleinstellung dient, auch der Spannungsabfall erfaßt wird, der sich während der Sperrzeit des steuerbaren Gleichrichters aufbaut. Damit dieser das Meßergebnis verfälschende Teil der am Abgriff des Potentiometers anstehenden Steuerspannung unterdrückt wird, ist ein besonderer Schalter erforderlich, der während der Sperrzeit des steuerbaren Gleichrichters das am Potentiometerabgriff anstehende Steuersignal gegenüber dem Bezugspotentialpunkt kurzschließt.

Der Erfindung liegt die Aufgabe zugrunde, eine Schaltungsanordnung gemäß dem Oberbegriff des Anspruchs 1 anzugeben, die mit einfachen Mitteln eine Nachregelung der Drehzahl in Abhängigkeit von der Belastung ermöglicht.

Die Lösung dieser Aufgabe erfolgt gemäß der Erfindung durch die kennzeichnenden Merkmale des Anspruchs 1.

Durch die erfindungsgemäßen Merkmale wird eine an den Anschlüssen des Ankers abgegriffene Spannung, die sich proportional mit der Drehzahl des Ankers ändert, gegebenenfalls nach einer Anpassung an die zulässigen Steuerdaten des Operationsverstärkers beiden Eingängen desselben zugeführt. Am Ausgang des Operationsverstärkers steht dann eine der Ankerdrehzahl entsprechende Steuerspannung zur Verfügung, die als Ist-Wert einem Eingang eines Komparators zugeführt ist, dessen zweitem Eingang ein Soll-Wertsignal aufgeschaltet ist. Liegt dabei der vom Operationsverstärker abgegebene Ist-Wert niedriger als der vorgegebene Soll-Wert, gibt der Komparator auf den Phasensteuereingang der Phasenanschnittsteuerung ein Signal, das den Phasenanschnittwinkel über den steuerbaren Gleichrichter so verändert, daß die Stromflußänderung den Ist-Wert zu einer Annäherung an den Soll-Wert bringt. Nachdem der Komparator nur ein Ein- oder Aussignal abgibt, wird eine schnelle Nachregelung der Drehzahl erreicht. Damit jedoch keine Überschwingungen im Steuerungsvorgang auftreten, ist in einer bevorzugten Ausführung an den Ausgang des Komparators ein Integrationskondensator angeschaltet.

Damit die Regelungseigenschaften noch verbessert werden, ist vorteilhafterweise in den Motorstromkreis ein Meßwiderstand in Serie geschaltet, an dem eine dem tatsächlich fließenden Motorstrom proportionale Meßspannungabgegriffen wird. Damit der Widerstandswert klein gehalten werden kann, kann die Meßspannung an den Eingang eines Verstärkers geschalte werden, dessen Ausgangssignal ein Sollwet-Potentiometer speist. Der Abgriff dieses Sollwert-Potentiometers ist an den entsprechenden Eingang des Komparators angeschlossen. Hierdurch wird der Soll-Wert abhängig vom Motorstrom so gesteuert, daß bei einer Belastung des Motors nicht nur die über der Ankerwicklung abgegriffene Steuerspannung sondern auch die am Meßwiderstand erfaßte Meßspannung zu einer Vergrößerung des Stromflußwinkels durch den steuerbaren Gleichrichter führen.

Die Erfindung ist nachfolgend anhand der Schaltungsskizze eines Ausführungsbeispiels näher erläutert.

Ein elektrischer Reihenschlußmotor mit einem Anker 1 und einer darauf angebrachten Ankerwicklung ist über Kohlebürsten 2 und einen Kollektor kontaktiert. An die Kohlebürsten ist jeweils eine Drossel 3 zur Unterdrückung von Punktstörspannungen angeschlossen, zu welchen je eine Teilwicklung 4 der Feldspule in Serie geschaltet ist. Während die eine Teilwicklung 4 unmittelbar an Netzspannung liegt, ist die andere Teilwicklung über die Serienschaltung aus einem steuerbaren Gleichrichter 5 und einem Meßwiderstand 6 an Masse angeschaltet, an welche auch der zweite Pol der Netzspannung angeschlossen ist. An die Verbindungspunkte 7 der Drosseln 3 mit den Teilwicklungen 4 ist jeweils eine Verbindungsleitung 8 angeschlossen, die über Schutzwiderstände 9 einerseits an den invertierenden Eingang 10 und andererseits an den nicht invertierenden Eingang 11 eines Operationsverstärkers 12 angeschaltet sind. An diese Eingänge sind auch Schutzdioden 13 angeschlossen, deren Kathode an Masse liegt. Dabei ist der invertierende Eingang 10 über einen Rückführwiderstand 14 mit dem Ausgang 15 des Operationsverstärkers 12 verbunden, während der nicht invertierende Eingang 11 über einen Widerstand 16 gegen Masse geschaltet ist. Die Schutzwiderstände 9 sind dabei so bemessen, daß die über der Ankerwicklung abgegriffene Spannung an den Verbindungsleitungen 8 nicht die an den Eingängen 10, 11 zulässigen Werte überschreitet und dienen in Verbindung mit den Widerständen 14, 16 zur Einstellung der Verstärkung. Parallel zum Ausgang 15 ist auch ein einendig an Masse geschalteter Kondensator 17 gelegt, der plötzliche, durch Störungen, insbesondere durch Bürstenfeuer an den Kohlebürsten auftretende Störspannungen aussiebt. Der Ausgang 15 des Operationsverstärkers 12 ist über einen zwischengeschalteten Begrenzungswiderstand 18 an einen Eingang 19 eines Komparators 20 geschaltet, an dessen zweiten Eingang 21 über einen Begrenzungswiderstand 22 der Abgriff eines Potentiometers 23 angeschlossen ist. Das Potentiometer 23 liegt mit einem Anschluß an Masse und ist mit dem zweiten Anschluß an den Ausgang 24 eines Anpassungsverstärkers 25 angeschlossen, dessen Eingang 26 an den Verbindungspunkt 27 zwischen dem steuerbaren Gleichrichter 5 und dem Meßwiderstand 6 angeschlossen ist. Der steuerbare Gleichrichter 5 ist als Triac ausgebildet. Seine Steuerelektrode 28 liegt am Ausgang 29 einer Phasenanschnittsteuerung 30, deren Eingang 31 mit dem Ausgang 32 des Komparators 20 verbunden ist. Parallel zum Ausgang 32 des Komparators 20 liegt ein Integrationskondensator 33.

Nach dem Anschalten des Reihenschlußmotors 1, 4 an ein Wechselspannungsnetz erreicht der Anker 1 eine Drehzahl, die dem am Sollwert-Potentiometer 23 vorgegebenen Soll-Wert entspricht. Wird davon ausgegangen, daß der Anker nicht belastet ist, dann ist der vom Phasenanschnittsteuergerät 30 vorgegebene Anschnittwinkel der Wechselstromhalbwellen bezogen auf den vorausgegangenen Null-Durchgang relativ groß. Es wird somit nur der auf 180° fehlende Teil der Halbwelle für einen Stromdurchgang ausgenutzt. Tritt danach eine mechanische Belastung bzw. Abbremsung am Anker 1 ein, dann fällt die an den Verbindungsleitungen 8 anstehende Ankerspannung entsprechend der Drehzahlverminderung ab. Nachdem der Operationsverstärker 12 als Differenzverstärker ausgebildet ist, bewirkt die fallende Spannungsdifferenz zwischen den Verbindungsleitungen 8 einen entsprechenden Abfall der Signalspannung am Ausgang 15 des Operationsverstärkers 12. Nachdem im vorausgegangenen Leerlauffall die Spannungen an den Eingängen 19, 21 des Komparators gleich hoch waren, unterschreitet nun die am Eingang 19 anstehende Ist-Wert-Signalspannung den am Sollwert-Potentiometer 23 eingestellten Soll-Wert. Die Folge davon ist ein Durchschalten des Komparatorausgangs auf die maximale Ausgangsspannung, die ihrerseits über den Phasensteuereingang 31 der Phasenanschnittsteuerung 30 am Ausgang 29 einen zum Null-Punkt hin verschobenen Steuerimpuls auf die Steuerelektrode 28 des Triac 5 leitet. Der hierdurch erhöhte Stromflußwinkel erzeugt einen erhöhten Mittelwert des Stromes durch die Feldwicklungen 4 und den Anker 1. Hierdurch steigt die Drehzahl des Ankers und damit die an der Ankerwicklung anstehende Spannung wieder an, bis die Spannungsdifferenz an den Verbindungsleitungen 8 einen Wert annimmt, der gleich oder größer als der vom Sollwert-Potentiomer 23 vorgegebene Soll-Wert ist. Die bei dem erhöhten Stromflußwinkel entsprechend steigende Meßspannung am Meßwiderstand 6 verursacht gleichzeitig am Ausgang 24 des Verstärkers 25 eine entsprechend erhöhte Speisespannung für das Sollwert-Potentiometer 23, so daß der Soll-Wert angehoben wird. Diese Anhebung ist jedoch so gering bemessen, daß durch diese Mitkopplung keine Übersteuerung stattfindet, die zu einer tatsächlichen Überhöhung der Drehzahl des Ankers 1 führt. Erreicht das Ist-Wertsignal danach den Wert des Soll-Wertsignals, dann schaltet der Komparator 20 sein Ausgangssignal wieder um, wodurch der Phasenanschnittwinkel durch die Phasenanschnittsteuerung 30 wieder gegen 180° wandert. Um krasse Sprünge zu vermeiden, ist an den Ausgang 32 der Integrationskondensator 33 angeschaltet, der wenigstens eine plötzliche Veränderung des Ansteuerwinkels von kleinen Werten nach großen Werten verhindert.

Bei einer Verminderung der mechanischen Belastung des Ankers 1 tritt eine Drehzahlerhöhung und damit eine entsprechende Vergrößerung der Differenzspannung an den Verbindungsleitungen 8 auf. Diese Änderung der Differenzspannung am Anker 1 bewirkt eine entsprechende Nachstellung der Ist-Wertspannung am Eingang 19 des Komparators, der dadurch sein Ausgangssignal wieder gegen "Null" schaltet, wodurch der Stromflußwinkel durch die Phasenanschnittsteuerung 30 zurückgenommen wird. Bei geringerem mittleren Stromfluß durch den Motor 1, 4 sinkt auch die Drehzahl des Ankers 1, bis wieder Gleichgewicht an den Eingängen 19, 21 des Komparators erreicht ist und bei weiterem Drehzahlabfall eine erneute Steigerung des Phasenanschnittwinkels eintritt. Es wird so für jede Halbwelle des Wechselstromes in Abhängigkeit von der Drehzahl des Ankers 1 der Phasenanschnittwinkel erneut festgelegt und über den Triac 5 gesteuert. Es ergibt sich so eine hohe Drehzahlkonstanz.

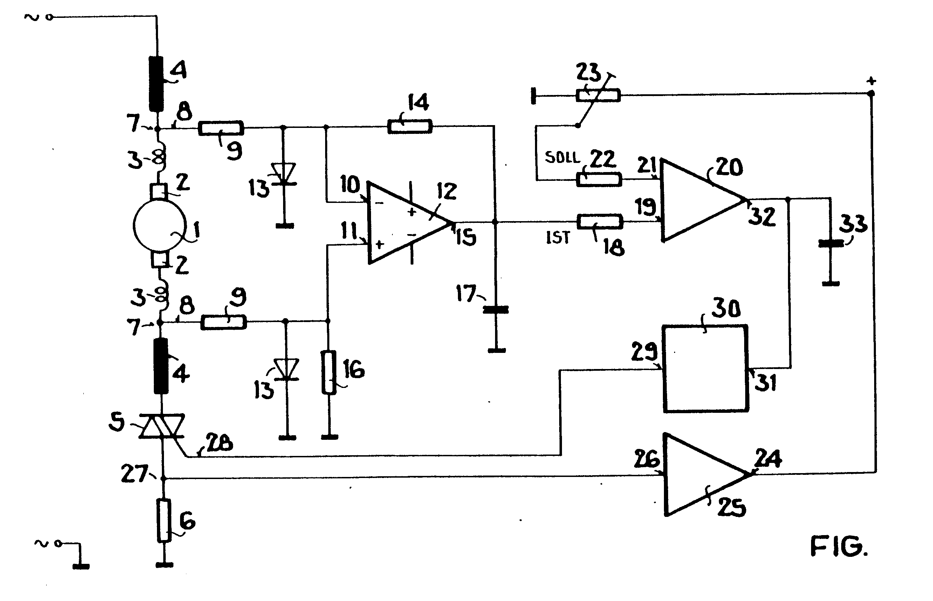

## Patentansprüche

1. Schaltungsanordnung zur Drehzahlregelung eines elektrischen Motors mit in Reihe

geschalteten Feld- (4) und Ankerwicklungen (1), zu welchen ein steuerbarer Gleichrichter (5) in Serie liegt, der von einer Phasenanschnittsteuerung (30) in Abhängigkeit von einem an der Ankerwicklung (1) abfallenden, über einen Operationsverstärker (12) geführten Steuersignal gesteuert ist, dadurch gekennzeichnet, daß von der Ankerwicklung (1) der eine Anschluß (7) an den invertierenden Eingang (10) und der andere Anschluß (7) an den nicht invertierenden Eingang (11) des Operationsverstärkers (12) angeschlossen ist, daß der Ausgang (15) des Operationsverstärkers (12) an einen Eingang (19) eines Komparators (20) gelegt ist, dessen zweiter Eingang (21) an einen Sollwertgeber (23) angeschlossen ist und daß der Ausgang (32) des Komparators (20) mit dem Phasensteuereingang (31) der Phasenanschnittsteuerung (30) verbunden ist.

2. Schaltungsanordnung nach Anspruch 1, dadurch gekennzeichnet, daß in die Verbindungsleitungen (8) von den Anschlüssen (7) der Ankerwicklung (1) zu den Eingängen (10, 11) des Operationsverstärkers (12) Schutzwiderstände (9) gelegt sind.

3. Schaltungsanordnung nach Anspruch 1 oder 2, dadurch gekennzeichnet, daß parallel zu jedem Eingang (10, 11) des Operationsverstärkers (12) eine Schutzdiode (13) gelegt ist.

4. Schaltungsanordnung nach Anspruch 1 oder einem der folgenden, dadurch gekennzeichnet, daß der Ausgang (15) des Operationsverstärkers (12) über einen Rückführungswiderstand (14) mit seinem invertierenden Eingang (10) verbunden ist.

5. Schaltungsanordnung nach Anspruch 1 oder einem der folgenden, dadurch gekennzeichnet, daß parallel zum Ausgang (15) des Operationsverstärkers (12) ein Kondensator (17) geschaltet ist.

6. Schaltungsanrodnung nach Anspruch 1 oder einem der folgenden, dadurch gekennzeichnet, daß in Serie mit der Ankerwicklung (1) an jedem Anschluß (2) eine Drossel (3) liegt und daß die Verbindungsleitungen (8) zu den Eingängen (10, 11) des Operationsverstärkers (12) zwischen der jeweiligen Drossel (3) und einem Teil der Feldwicklung (4) angeschlossen sind.

7. Schaltungsanordnung nach Anspruch 1 oder einem der folgenden, dadurch gekennzeichnet, daß der Sollwertgeber ein Potentiometer (23) ist, dessen Abgriff an den Sollwert-Eingang (21) des Komparators (20) geschaltet ist und das von einer vom Motorstrom abhängigen Spannung gespeist ist.

8. Schaltungsanordnung nach Anspruch 1 oder einem der folgenden, dadurch gekennzeichnet, daß in den Stromkreis des Motors ein Widerstand (6) gelegt ist und daß eine der am Widerstand (6) abfallenden Meßspannung proportionale Steuerspannung dem Sollwertgeber (23) zugeführt ist.

9. Schaltungsanordnung nach Anspruch 8, dadurch gekennzeichnet, daß die Meßspannung einem Verstärker (25) als Steuersignal zugeführt ist und daß der Ausgang (24) des Verstärkers an das Potentiometer (23) angeschaltet ist.

**Claims**

1. Circuit for regulating the rotational speed of an electric motor with in-series-connected field winding (4) and armature winding (1) which are in series with a controllable rectifier (5) controlled by a phase shift control (30) as a function of a control signal dropping at the armature winding (1) and passed through an operational amplifier (12), characterized in that one connection (7) of the armature winding (1) is connected to the inverting input (10) and the other connection (7) is connected to the non-inverting input (11) of the operational amplifier (12), that the output (15) of the operational amplifier (12) is connected to one input (19) of a comparator (20) the second input (21) of which is connected to a set-point device (23) and that the output (32) of the comparator (20) is connected to the phase control input (31) of the phase shift control (30).

2. Circuit according to Claim 1, characterised in that protective resistors (9) are inserted in the connecting lines (8) from the connections (7) of the armature winding (1) to the inputs (10, 11) of the operational amplifier (12).

3. Circuit according to Claim 1 or 2, characterised in that a protection diode (13) is inserted in parallel with each input (10, 11) of the operational amplifier (12).

4. Circuit according to Claim 1 or any one of the following claims, characterized in that the output (15) of the operational amplifier (12) is connected via a feedback resistor (14) to its inverting input (10).

5. Circuit according to Claim 1 or any one of the following claims, characterized in that a capacitor (17) is connected in parallel with the output (15) of the operational amplifier (12).

6. Circuit according to Claim 1 or any one of the following claims, characterized in that a choke (3) is in series with the armature winding (1) at each connection (2) and that the connecting lines (8) to the inputs (10, 11) of the operational amplifier (12) are connected between the respective choke (3) and a part of the field winding (4).

7. Circuit according to Claim 1 or any one of the following claims, characterized in that the set-point device is a potentiometer (23) whose pick-off is connected to the set-point input (21) of the comparator (20) and which is fed by a voltage dependent on the motor current.

8. Circuit according to Claim 1 or any one of the following claims, characterized in that a resistor (6) is inserted in the circuit of the motor and that a control voltage proportional to the test voltage dropping at the resistor (6) is fed to the set-point device (23).

9. Circuit according to Claim 8, characterized in that the test voltage is fed to an amplifier (25) as control signal and that the output (24) of the amplifier is connected to the potentiometer (23).


## Revendications

1. Montage pour la régulation de la vitesse de rotation d'un moteur électrique, comprenant des enroulements de champ (4) et d'induit (1) connectée en série entre eux et avec un redresseur (5) commandé par un dispositif de commande par coupure du début de l'alternance (30) en fonction d'un signal de commande produit sur l'enroulement d'induit (1) et appliqué à travers un amplificateur opérationnel (12), caractérisé en ce que l'une (7) des connexions de l'enroulement d'induit (1) est raccordée à l'entrée inverseuse (10) et l'autre connexion (7) est raccordée à l'entrée non inverseuse (11) de l'amplificateur opérationnel (12), que la sortie (15) de l'amplifcateur opérationnel (12) est reliée à une entrée (19) d'un comparateur (20) dont la seconde entrée (21) est reliée à un générateur de valeur de consigne et que la sortie (32) du comparateur (20) est raccordée à l'entrée de commande de phase (31) du dispositif de commande par coupure du début de l'alternance (30).

2. Montage selon la revendication 1, caractérisé en ce que les lignes (8) reliant les connexions (7) de l'enroulement d'induit aux entrées (10, 11) de l'amplificateur opérationnel (12) contiennent des résistances de protection (9).

3. Montage selon la revendication 1 ou 2, caractérisé en ce q'une diode de protection (13) est branchée en parallèle sur chaque entrée (10, 11) de l'amplificateur opérationnel (12).

4. Montage selon la revendication 1 ou une des revendications suivantes, caractérisé en ce que la sortie (15) de l'amplificateur opérationnel (12) est reliée à travers une résistance de rétroaction (14) à son entrée inverseuse (10).

5. Montage selon la revendication 1 ou une des revendications suivantes, caractérisé en ce qu'un condensateur (17) est branché en parallèle sur la sortie (15) de l'amplificateur opérationnel (12).

6. Montage selon la revendication 1 ou une des revendications suivantes, caractérisé en ce qu'une bobine d'inductance (3) est montée en série avec l'enroulement d'induit (1) sur chaque connexion (2) et que les lignes de liaison (8) aux entrées (10, 11) de l'amplificateur opérationnel (12) sont branchées entre la bobine d'inductance (3) correspondante et une partie de 1 enroulement de champ (4).

7. Montage selon la revendiation 1 ou une de revendications suivantes, caractérisé en ce que le générateur de valeur de consigne est un potentiomètre (23) dont le curseur est raccordé à l'entrée de valeur de consigne (21) du comparateur (20) et qui est alimenté par une tension dépendante du courant moteur.

8. Montage selon la revendication 1 ou une des revendications suivantes, caractérisé en ce que le circuit parcouru par le courant moteur contient une résistance (6) et que le générateur de valeur de consigne (23) est alimenté avec une tension de commande qui est proportionnelle à la tension mesurée sur cette résistance (6).

9. Montage selon la revendication 8, caractérisé en ce que la tension mesurée sur la résistance est envoyée en tant que signal de commande à un amplificateur (25) et que la sortie (24) de l'amplificateur est raccordée au potentiomètre (23).

FIG.